# EUROPÄISCHE PATENTANMELDUNG

(11) **EP 1 745 965 A2**
(43) Veröffentlichungstag der Anmeldung: **24.01.2007**
(21) Anmeldenummer: 06014900.2
(22) Anmeldetag: 18.07.2006
(51) Int. Cl.: B60J 7/22

(54) **Luftströmung an einem öffnungsfähigen Fahrzeugdach**

(30) Priorität: 18.07.2005 DE 102005033431
(71) Anmelder: Webasto AG, 82131 Stockdorf (DE)
(72) Erfinder: Bergmiller, Alexander, 86343 Königsbrunn (DE)

(57) **Zusammenfassung**

Die Erfindung betrifft eine Vorrichtung (10) zur Beeinflussung einer Luftströmung im Bereich der Dachöffnung (12) eines öffnungsfähigen Fahrzeugdaches mit einem im Bereich der Vorderkante (14) der Dachöffnung (12) angeordneten Windabweiserelement (18) und mit einem Tragarm (20), welcher an einem vorderen Tragarmende das Windabweiserelement (18) trägt und mit einem hinteren Tragarmende um eine parallel zur Vorderkante der Dachöffnung sich erstreckende Schwenkachse (22) zum Ausschwenken und Einschwenken des Tragarms (20) schwenkbar gelagert ist. Um in konstruktiv einfacher Weise eine erhöhe Freiheit hinsichtlich der Wahl des Verlagerungswegs des Windabweiserelements (18) zu ermöglichen, ist erfindungsgemäß vorgesehen, dass die Schwenkachse (22) des Tragarms (20) in Fahrzeuglängsrichtung verschiebbar ist und eine Verschiebung der Schwenkachse (22) beim Ausschwenken und Einschwenken durch eine den Tragarm (20) in Ausschwenkrichtung belastende Feder (34) bewirkt wird, die einerseits am Fahrzeugdach (26) und andererseits in einem mittleren Bereich des Tragarms (20) gelagert ist.

## Beschreibung

Die vorliegende Erfindung betrifft eine Vorrichtung nach dem Oberbegriff des Anspruchs 1, zur Beeinflussung einer Luftströmung im Bereich der Dachöffnung eines öffnungsfähigen Fahrzeugdaches.

Derartige Vorrichtungen sind beispielsweise aus der DE 199 58 742 A1 und der DE 103 48 381 A1 bekannt.

Diese bekannten Vorrichtungen weisen ein als Windabweiserprofil ausgebildetes Windabweiserelement auf, welches sich über die gesamte Breite einer Dachöffnung erstreckt und dazu dient, eine während der Fahrt des Fahrzeugs über das Fahrzeugdach hinwegströmende Luftströmung nach oben abzulenken, um Windgeräusche zu vermindern.

Bei diesen Windgeräuschen handelt es sich insbesondere um vergleichsweise hochfrequente Windgeräusche (z. B. Rauschen und Pfeiffen), deren Intensität mit steigender Fahrgeschwindigkeit zunimmt. Darüber hinaus kann es sich auch um vergleichsweise niederfrequente, so genannte Wummergeräusche handeln, die als ein Resonanzeffekt bei bestimmten Fahrzeuggeschwindigkeiten und insbesondere bei vergleichsweise großem Dachöffnungsgrad auftreten.

Die Windabweiserprofile der bekannten Vorrichtungen sind beiderseits der Dachöffnung jeweils über einen Tragarm am Fahrzeugdach angelenkt, wobei das hintere Tragarmende um eine parallel zur Vorderkante der Dachöffnung sich erstreckende Schwenkachse zum Ausschwenken und Einschwenken des Tragarms schwenkbar gelagert ist. Das Windabweiserprofil kann somit durch eine einfache Schwenkbewegung des Tragarms zwischen einer ausgestellten Wirkstellung und einer unter die Dachkontur abgesenkten Ruhestellung verlagert werden.

Nachteilig ist bei den bekannten Vorrichtungen, dass der konkrete Verlagerungsweg des Windabweiserelements bei der Verschwenkung des Tragarms konstruktionsbedingt in engen Grenzen vorgegeben ist. Der Verlagerungsweg ist nämlich stets ein Abschnitt eines Kreisbogens, dessen Mittelpunkt der dachfesten Schwenkachse entspricht und dessen Radius der Länge des Tragarms entspricht.

Bei den oben erwähnten bekannten Vorrichtungen bildet der Verlagerungsweg des Windabweiserprofils beispielsweise einen Kreisbogenabschnitt, derart, dass das Windabweiserprofil beim Ausschwenken des Tragarms im Wesentlichen nur vertikal verlagert wird. Demgegenüber ist eine vor allem am Ende des Ausschwenkvorgangs erfolgende Verlagerung in Fahrzeuglängsrichtung nach hinten praktisch vernachlässigbar.

Es ist eine Aufgabe der vorliegenden Erfindung, eine Vorrichtung der eingangs genannten Art so weiterzubilden, dass in konstruktiv besonders einfacher Weise eine erhöhe Freiheit hinsichtlich der Wahl des Verlagerungswegs des Windabweiserelements ermöglicht wird.

Diese Aufgabe wird gelöst durch eine Vorrichtung nach Anspruch 1. Die abhängigen Ansprüche betreffen vorteilhafte Weiterbildungen der Erfindung.

Die erfindungsgemäße Vorrichtung ist dadurch gekennzeichnet, dass die Schwenkachse des Tragarms in Fahrzeuglängsrichtung verschiebbar ist und eine Verschiebung der Schwenkachse beim Ausschwenken und Einschwenken durch eine den Tragarm in Ausschwenkrichtung belastende Feder bewirkt wird, die einerseits am Fahrzeugdach gelagert ist und andererseits in einem mittleren Bereich des Tragarms gelagert ist.

Für die Erfindung wesentlich ist zum einen die Verschiebbarkeit der Schwenkachse des Tragarms, durch welche einer Vertikalverlagerungskomponente des Windabweiserelements bei der Verschwenkung eine zusätzliche nicht-vertikale Verlagerungskomponente durch eine entsprechende Verschiebung der Schwenkachse hinzugefügt werden kann. Zum anderen ist die Anordnung einer Feder wesentlich, die bei der Erfindung eine Doppelfunktion besitzt, nämlich einerseits die Verschiebung der Schwenkachse beim Ausschwenken und Einschwenken bewirkt und andererseits den Tragarm in Ausschwenkrichtung belastet. Damit ist es möglich, in konstruktiv einfacher Weise Veriagerungswege für das Windabweiserelement vorzusehen, die neben einer Vertikalkomponente z. B. auch eine nennenswerte Horizontalkomponente aufweisen, sei es in Fahrzeuglängsrichtung betrachtet nach hinten oder nach vorne.

Bevorzugt ist das Ausschwenken und Einschwenken des Tragarms und das damit verbundene Ausstellen des Windabweiserelements in eine Wirkstellung bzw. Absenken des Windabweiserelements in eine Ruhestellung unter die Dachkontur derart mit dem Betrieb des öffnungsfähigen Fahrzeugdaches (nachfolgend auch als Dachöffnungssystem bezeichnet) gekoppelt, dass der Tragarm beim Öffnen des Fahrzeugdaches automatisch ausschwenkt und beim Schließen des Fahrzeugdaches automatisch wieder einschwenkt. Bei der vorliegenden Erfindung ist der Tragarm in Ausschwenkrichtung federbelastet. Die automatische Verstellung der Vorrichtung kann daher in einfacher Weise durch eine Verlagerung eines auf den Tragarm wirkenden Anschlags erfolgen.

Zur Verlagerung dieses Anschlags kann eine separate Verstelleinrichtung vorgesehen sein. In einer bevorzugten Ausführungsform ist jedoch vorgesehen, dass der auf den Tragarm wirkende Anschlag von oder an einem Deckel gebildet ist, welcher als Teil des Dachöffnungssystems zum wahlweisen Öffnen und Schließen der Dachöffnung dient. Beim Schließen des Deckels kann dieser Deckel bzw. ein an der Unterseite des Deckels angeordneter Anschlag dann den Tragarm zwangsweise (entgegen der Federbelastung) einschwenken, um das Windabweiserelement unter die Dachkontur zu verlagern, wohingegen beim Öffnen des Deckels der Anschlag z. B. nach oben und/oder nach hinten zurückweicht und das federgetriebene Ausschwenken des Tragarms freigibt, um das Windabweiserelement über die Dachkontur auszustellen.

Die erfindungsgemäße Vorrichtung ist insbesondere für Dachöffnungssysteme mit einem zum Öffnen und Schließen der Dachöffnung mit wenigstens einem Teil seiner Längserstreckung über oder unter einen hinter der Dachöffnung befindlichen festen Dachabschnitt verlagerbaren Deckel geeignet. Beispiele hierfür sind so genannte Schiebe/Hebedächer oder Spoilerdächer. Andere Dachöffnungssysteme sind dem Fachmann wohlbekannt und bedürfen hier daher keiner näheren Erläuterung.

In einer Ausführungsform ist vorgesehen, dass das Windabweiserelement als ein in Fahrzeugquerrichtung sich erstreckendes Windabweiserprofil ausgebildet ist, welches sich vorzugsweise über die gesamte Dachöffnungsbreite erstreckt. Die Gesamtheit der vom Fahrtwind angeströmten Vorrichtungsflächen kann an dem Windabweiserelement vorgesehen sein. In einer alternativen Ausführungsform ist vorgesehen, dass das Windabweiserelement zusammen mit wenigstens einer daran angebundenen, im ausgestellten Zustand des Windabweiserelements ebenfalls im Fahrtwind stehenden Komponente den aerodynamisch wirksamen Windabweiser bildet. Bei einer solchen zusätzlichen Komponente kann es sich beispielsweise um ein sich in Fahrzeugquerrichtung erstreckendes Netz handeln, dessen Ränder einerseits im Bereich der Vorderkante der Dachöffnung und andererseits am Windabweiserelement befestigt sind. Beim Ausstellen des Windabweiserelements kann ein solches Netz dann zwischen der Vorderkante der Dachöffnung und dem Windabweiserelement aufgespannt werden. Auch in diesem Fall kann das Windabweiserelement für den anströmenden Fahrtwind ein beispielsweise über die gesamte Dachöffnungsbreite sich erstreckendes Profil ausbilden, um die über dem Netz auftreffende Luftströmung nach oben abzulenken. Jedenfalls ist das Windabweiserelement bei der Erfindung eine Komponente, die in Wirkstellung über die Dachkontur hinaus nach oben verlagert ist.

Wenn hier von einem Tragarm die Rede ist, so soll dieser Begriff selbstverständlich den Fall umfassen, bei welchem ein solcher Tragarm in an sich bekannter Weise doppelt, nämlich beiderseits der Dachöffnungsmitte vorgesehen ist, beispielsweise jeweils im Bereich einer der beiden Seitenkanten der Dachöffnung. Das von solchen Tragarmen jeweils getragene Windabweiserelement kann ein und dasselbe, in Fahrzeugquerrichtung durchgehende Element (z. B. Windabweiserprofil) sein. Auch ist es möglich, solche Tragarme einstückig mit dem Windabweiserelement vorzusehen. Altemativ kann das Windabweiserelement als separates Bauteil an den freien Enden der Tragarme angebunden sein, beispielsweise befestigt.

Sowohl ein für die Verschwenkung des Tragarms vorgesehenes Schwenklager als auch eine dachseitige Befestigung des Windabweisemetzes (falls vorhanden) können konstruktiv einfach an einem unterhalb der Dachkontur die Dachöffnung umgebenden Dachrahmen ausgebildet sein. Ein derartiger Dachrahmen kann wesentliche Komponenten des betreffenden Dachöffnungssystems (z. B. Verstellmechanik für einen Deckel etc.) und/oder Wasserableitungseinrichtungen umfassen. Derartige Dachrahmen für Dachsysteme sind an sich bekannt und bedürfen daher keiner detaillierten Erläuterung. Dasselbe gilt für entsprechende Verstellmechanismen für Fahrzeugdeckel, die zumeist beiderseits der Dachöffnung angeordnete Führungsschienen umfassen, in welchen mit dem Deckel verbundene Gleitstücke laufen. Auch können in solchen Führungsschienen beispielsweise die Enden von Ausstellhebein verschiebbar gelagert sein, die andererseits am Deckel befestigt oder angelenkt sind.

In einer bevorzugten Ausführungsform ist die Verschiebbarkeit der Schwenkachse des Tragarms durch eine Kulissenführung realisiert. Beispielsweise kann eine dachfeste Kulisse vorgesehen sein, in welcher ein in Fahrzeugquerrichtung abstehender Lagerzapfen des betreffenden Tragarmendes eingreift und somit verschieblich geführt ist. Im einfachsten Fall handelt es sich bei der Kulisse um ein geradlinig in Fahrzeuglängsrichtung (horizontal) verlaufendes Langloch, in welchem der Lagerzapfen des Tragarms geführt ist. Letzterer Verlauf der Kulissenbahn ist besonders günstig, um einen Verlagerungsweg des Windabweiserelements mit einer besonders großen Horizontalkomponente zu erzielen. Prinzipiell kommen selbstverständlich auch andere Verläufe einer solchen Kulissenbahn in Betracht.

Alternativ zu der dachfesten Anordnung der Kulisse, in deren Führungsbahn ein tragarmfester Schwenkzapfen läuft, ist auch die umgekehrte Anordnung möglich, bei welcher die Kulisse im Endbereich des Tragarms ausgebildet ist und ein dachfester Lagerzapfen in diese Kulisse am Tragarm eingreift. In letzterem Fall ergibt sich eine Verschiebbarkeit der Schwenkachse bezüglich des Tragarms, wohingegen bei der oben erwähnten Variante diese Verschiebbarkeit bezüglich des Fahrzeugdaches vorliegt.

Die Ausbildung der Kulissenbahn am Fahrzeugdach, also z. B. an einem Dachrahmen des Dachöffnungssystems, besitzt den Vorteil, dass der Tragarm bzw, dessen Ende besonders schmal dimensioniert werden kann, da in diesem Bereich keine Kulisse unterzubringen ist. Die Anordnung eines seitlich vom Tragarmende abstehenden Lagerzapfens ist auch bei vergleichsweise schmalen Tragarm stets problemlos möglich.

Die einerseits am Fahrzeugdach und andererseits in einem mittleren Bereich des Tragarms gelagerte Feder bewirkt sowohl eine Belastung des Tragarms in Ausschwenkrichtung als auch eine Verschiebung der Schwenkachse des Tragarms beim Ausschwenken und Einschwenken. Nicht jede Feder oder jede beliebig angeordnete Feder vermag dies zu leisten. Die gemäß der Erfindung vorgesehene Doppelfunktion der Feder wird jedoch erfüllt, wenn der auf den mittleren Bereich des Tragarms wirkende Federabschnitt (z. B. ein Federende) diesen Bereich des Tragarms derart belastet, dass sowohl ein bezüglich der Schwenkachse auf den Tragarm wirkendes Drehmoment (in Ausschwenkrichtung) als auch eine entlang des Tragarms zum Schwenklager hin übertragene Zugkraft oder Schubkraft bereitstellt. Letztere auf die verschiebbare Schwenklagerung wirkende Kraftkomponente wirkt nicht im Sinne einer Verschenkung sondern ausschließlich im Sinne einer Verschiebung der Schwenkachse (bezüglich des Fahrzeugdaches oder bezüglich des Tragarms). In einer besonders bevorzugten Ausführungsform ist vorgesehen, dass die Verschiebung der Schwenkachse beim Verschwenken des Tragarms durch die hierbei erfolgende Federverstellung bereits eindeutig definiert vorgegeben wird. Anders ausgedrückt steuert dann allein die Feder den Bewegungsablauf, der sich aus einer Verschwenkung um die Schwenkachse herum und einer Verschiebung der Schwenkachse und somit des Tragarms zusammensetzt. Vorteilhaft sind dann keine zusätzlichen Bauteile nötig, um diese beiden Bewegungskomponenten in vorgegebener Weise zu koordinieren (z. B. zusätzlicher Hebel).

In einer Ausführungsform ist vorgesehen, dass die Feder sowohl am Fahrzeugdach als auch am Tragarm jeweils ortsfest und drehfest gelagert ist. Bei entsprechender Ausgestaltung lässt sich damit die gemäß der Erfindung vorgesehene Doppelfunktion der Feder erzielen.

In einer vorteilhaften Weiterbildung der Erfindung ist jedoch vorgesehen, dass die Lagerung der Feder am Fahrzeugdach und/oder die Lagerung der Feder am Tragarm eine Schwenklagerung ist. Insbesondere kann z. B. vorgesehen sein, dass entweder die fahrzeugdachfeste oder die tragarmfeste Lagerung der Feder eine Schwenklagerung ist. Damit lässt sich in vielen Fällen die Gestaltung einer geeigneten Feder vereinfachen.

In einer bevorzugten Ausführungsform ist die Feder eine Schenkelfeder. Derartige Schenkelfedern weisen im Allgemeinen einen mittleren Federabschnitt auf, in welchem z. B. ein im Querschnitt kreisrunder Federdraht spiralig gebogen ist, wobei sich von dem mittleren Federabschnitt zwei (typischerweise geradlinig) weg erstreckende Federschenkel vorgesehen sind und die Federverstellung ein gegeneinander Verschwenken der beiden Federschenkel darstellt. Eine solche Schenkelfeder eignet sich besonders gut zur Realisierung der gemäß der Erfindung vorgesehenen Doppelfunktion dieser Feder.

In einer Ausführungsform ist beispielsweise vorgesehen, dass ein erster Schenkel der Schenkelfeder drehfest gelagert ist, wohingegen ein zweiter Schenkel beim Ausschwenken und Einschwenken des Tragarms verschwenkt und mit seinem freien Ende angelenkt (z. B. schwenkgelagert) ist. Hierbei kann die drehfeste Lagerung am Fahrzeugdach (z. B. Dachrahmen) und die gelenkige Lagerung am Tragarm vorgesehen sein, oder umgekehrt.

Wenn eine Schenkelfeder verwendet wird, von welcher einer der Schenkel drehfest am Fahrzeugdach oder am Tragarm gelagert ist, so ist an dieser Komponente (Fahrzeugdach oder Tragarm) in einer Ausführungsform vorgesehen, dass der mittlere Federabschnitt (z. B. das "Auge" eines spiraligen Schenkelfederabschnitts) an dieser Komponente verankert ist.

Die Erfindung wird nachfolgend anhand von Ausführungsbeispielen mit Bezug auf die beigefügten Zeichnungen weiter beschrieben. Es stellen jeweils schematisch dar:
- Figur 1: eine Windabweiservorrichtung gemäß einer ersten Ausführungsform, wobei ein Windabweiserelement in seiner Ruhestellung dargestellt ist,
- Figur 2: eine der Fig. 1 entsprechende Darstellung bei ausgestelltem Windabweiserelement,
- Figur 3: eine der Fig. 1 entsprechende Darstellung einer Windabweiservorrichtung gemäß einer weiteren Ausführungsform,
- Figur 4: eine der Fig. 3 entsprechende Darstellung bei ausgestelltem Windabweiserelement,
- Figur 5: eine perspektivische Ansicht einer für eine Windabweiservonichtung einsetzbaren Schenkelfeder,
- Figur 6: ein Detail aus Fig. 4 in einer modifizierten Ausführungsform,
- Figur 7: eine der Fig. 1 entsprechende Darstellung einer Windabweiservorrichtung gemäß einer weiteren Ausführungsform, und
- Figur 8: eine der Fig. 7 entsprechende Darstellung bei ausgestelltem Windabweiserelement.

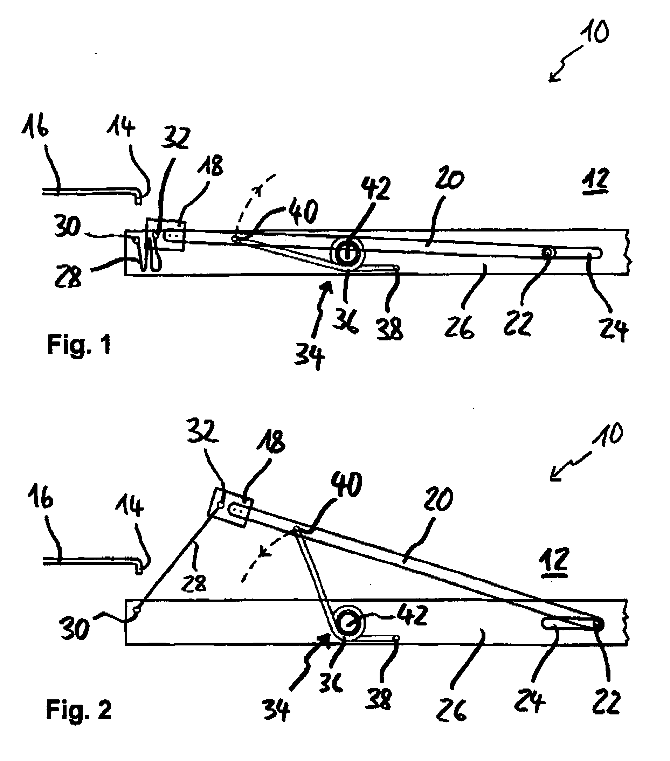

Die Fig. 1 und 2 zeigen in einer schematisierten Seitenansicht einige wesentliche Komponenten einer Vorrichtung 10 zur Beeinflussung einer Luftströmung im Bereich einer Dachöffnung 12 eines öffnungsfähigen Fahrzeugdaches (z. B. Schiebe/Hebedach, Spoilerdach etc.).

Fig. 1 zeigt die Vorrichtung 10 in einer Situation, in welcher die Dachöffnung 12 durch einen (in der Figur nicht dargestellten) Deckel verschlossen ist, dessen Vorderkante dann in an sich bekannter Weise gegen eine Vorderkante 14 der Dachöffnung 12 dichtend anliegt (Fahrzeugdach geschlossen). Die Vorderkante 14 der Dachöffnung 12 ist vom vorderen Rand eines insgesamt etwa rechteckigen Dachausschnitts einer festen Dachhaut 16 des Fahrzeugs gebildet. Bei geschlossenem Fahrzeugdach befinden sich die Komponenten der Vorrichtung 10 allesamt unterhalb der von der Dachhaut 16 und dem Deckel definierten Fahrzeugdachkontur.

Fig. 2 zeigt die Vorrichtung 10 in einer Situation, in welcher die Dachöffnung 12 zumindest im dargestellten (vorderen) Bereich freigegeben ist (Fahrzeugdach geöffnet). Diese wahlweise vom Fahrer des Fahrzeugs zu bewirkende Öffnung des Fahrzeugdaches kann in an sich bekannter Weise z. B. durch eine Verlagerung des Deckels nach hinten, beispielsweise unter oder über einen hinter der Dachöffnung 12 befindlichen festen Dachhautabschnitt erfolgen. Beim Öffnen des Fahrzeugdaches gelangt ein Windabweiserelement 18 aus seiner unter die Dachkontur versenkten Ruhestellung gemäß Fig. 1 in die über die Dachkontur nach oben ausgestellte Wirkstellung gemäß Fig. 2.

Abweichend von der vereinfachten Darstellung in den Figuren handelt es sich bei dem Windabweiserelement 18 um ein parallel zur Vorderkante 14 der Dachöffnung 12 (in Fahrzeugquerrichtung) sich erstreckendes flügelartiges Windabweiserprofil zur Ablenkung eines Fahrtwinds nach oben und somit zur Reduzierung von Windgeräuschen. Seitliche Enden des Windabweiserelements 18 sind jeweils an einem vorderen Ende von zwei Tragarmen 20 befestigt, die im Bereich der beiden Seitenkanten der Dachöffnung 12 angeordnet sind.

Von den beiden symmetrisch zu einer vertikalen Fahrzeuglängsmittelebene angeordneten und synchron bewegten Tragarmen ist in der schematisierten Seitenansicht lediglich einer erkennbar und mit 20 bezeichnet. Dasselbe gilt für nachfolgend beschriebene, ebenfalls beiderseits der Dachöffnung 12 symmetrisch angeordnete Komponenten.

Die hinteren Tragarmenden sind jeweils mit einem nach außen weisenden Lagerzapfen 22 versehen, der in Fahrzeuglängsrichtung verschieblich in einer Kulisse 24 geführt ist und somit eine parallel zur Vorderkante 14 der Dachöffnung 12 sich erstreckende Schwenkachse für den betreffenden Tragarm 20 definiert.

In an sich bekannter Weise ist ein die Dachöffnung 12 umgebender, etwa rechteckiger Dachrahmen 26 unterhalb der Dachkontur angeordnet, welcher die (nicht dargestellten) Komponenten des betreffenden Dachöffnungssystems trägt. An den beiden Rahmenseitenteilen oder an hinteren Bereichen eines Rahmenvorderteils dieses Dachrahmens 26 ist jeweils die erwähnte Kulisse 24 ausgebildet, die zusammen mit dem Lagerzapfen 22 des betreffenden Tragarms 20 ein verschiebliches Schwenklager bildet, mittels welchem der Tragarm 20 aus der in Fig. 1 dargestellten versenkten Stellung beim Öffnen des Fahrzeugdaches in die Wirkstellung gemäß Fig. 2 ausgeschwenkt bzw. beim Schließen des Fahrzeugdaches wieder eingeschwenkt werden kann.

Im dargestellten Ausführungsbeispiel bildet das profilartige Windabweiserelement 18 den oberen Abschluss eines Windabweisers, der in seinem unteren Bereich durch ein flexibles Netz 28 vervollständigt wird. Das Netz 28 ist eine sich ebenfalls über die gesamte Breite der Dachöffnung 20 in Fahrzeugquerrichtung sich erstreckende Materialbahn, deren Längsränder einerseits dachfest bei 30 (an einem Vorderteil des Dachrahmens 26) und andererseits am Windabweiserelement 18 bei 32 befestigt sind. Das Netz 28 wird beim Übergang der Vorrichtung 10 aus deren Ruhestellung gemäß Fig. 1 in deren Wirkstellung gemäß Fig. 2 somit zwischen dem Bereich der Vorderkante 14 der Dachöffnung 12 und dem Windabweiserelement 18 aufgespannt und schräg in den Fahrtwind gestellt,

Abweichend vom dargestellten Ausführungsbeispiel könnte anstatt des flexiblen Netzes 28 auch eine andere Windabweiserkomponente vorgesehen sein bzw. könnte sich das Windabweiserelement 18 sich so weit nach unten erstrecken, dass sämtliche vom Fahrtwind angeströmten Windabweiserflächen an diesem Element 18 ausgebildet sind.

Im eingeschwenkten Zustand des langgestreckten Tragarms 20 erstreckt sich dieser im Wesentlichen in Fahrzeuglängsrichtung und wird in dieser Ruhestellung in an sich bekannter Weise dadurch gehalten, dass ein seitlicher Deckelrand bzw. ein an der Unterseite des seitlichen Deckelrands abstehender Anschlag einen mittleren Bereich des Tragarms 20 nach unten belastet.

Diese Belastung bei geschlossenem Fahrzeugdach überwindet die Federkraft einer den Tragarm 20 in Ausschwenkrichtung belastenden Schenkelfeder 34. Wie die oben beschriebene Tragarmkonstruktion ist auch diese Schenkelfeder 34 doppelt (für jeden Tragarm eine Feder) vorgesehen und in das betreffende Rahmenteil des Dachrahmens 26 integriert.

Die verwendete Schenkelfeder 34 besteht aus einem im Querschnitt kreisrunden Federdraht, der in einem mittleren Federabschnitt spiralförmig gewickelt ein "Auge" 36 ausbildet, von welchem im dargestellten Ausführungsbeispiel sich zwei geradlinig verlaufende Federdrahtabschnitte weg erstrecken. Erste und zweite (jeweils umgebogene) Federenden sind mit 38 bzw. 40 bezeichnet. Das Federauge 36 ist von einem seitlich nach innen vom Dachrahmen 26 abstehenden Haltezapfen 42 durchsetzt und somit ortsfest am Dachrahmen 26 gehalten. Des Weiteren ist das erste Federende 38 und somit der ganze erste Federschenkel am Dachrahmen 26 fixiert. Im dargestellten Ausführungsbeispiel steht hierfür das umgebogene erste Federende 38 im Eingriff mit einer entsprechenden Halteaussparung (oder Haltekante) des Dachrahmens 26. Im Hinblick auf die hier vorgesehenen Belastungsverhältnisse ist es zur Fixierung des ersten Federschenkels ausreichend, ein Ausweichen des Federendes 38 in Fig. 1 nach oben bzw. im Gegenuhrzeigersinn zu verhindern.

Das am Ende des zweiten, im Vergleich zum ersten Federschenkel wesentlich längeren Federschenkels befindliche Federende 40 ist in einem mittleren Bereich des Tragarms 20 angelenkt. Dies an einer Stelle, die in Fahrzeuglängsrichtung betrachtet zwischen dem vorderen Tragarmende und dem Federauge 36 liegt. Diese Anlenkung ist durch einen Eingriff des umgebogenen Federendes 40 in eine entsprechend dimensionierte Lageraussparung des Tragarms 20 bewerkstelligt, so dass eine Relativverschwenkbarkeit zwischen dem Tragarm 20 und dem zweiten Federschenkel gegeben ist. Der zweite Federschenkel erstreckt sich in dieser Situation mit einer geringfügigen Neigung (nach vorne hin nach oben) bezüglich der Dachkontur, die hier horizontal verläuft. Der Lagerzapfen 22 des Tragarms 20 befindet sich aufgrund der geometrischen Verhältnisse am vorderen Ende der als Langloch ausgebildeten Kulisse 24.

Bei der beschriebenen dachfesten Fixierung der Federabschitte 36 und 38 versucht die Feder 34 aufgrund ihrer elastischen Vorspannung das zweite Federende und somit die Anlenkungsstelle des Tragarms 20 entlang der in Fig. 1 gestrichelt eingezeichneten Linie nach oben zu verschwenken.

Diese von der Feder 34 getriebene Verschwenkung findet tatsächlich statt, wenn das Fahrzeugdach unter Verlagerung des (nicht dargestellten) Deckels geöffnet wird, so dass der Tragarm 20 nicht mehr durch den Deckel zwangsweise in der Ruhestellung gemäß Fig. 1 gehalten wird.

Der in Fig.1 gestrichelt eingezeichnete Verschwenkungsweg des Federendes 40 ist näherungsweise ein Kreisbogen, dessen Mittelpunkt in der Nähe des Federauges 36 liegt und dessen Radius etwa der Länge des zweiten Federschenkels entspricht. Aufgrund der dargestellten geometrischen Verhältnisse, insbesondere des erheblichen Abstands zwischen dem Auge 36 und dem Lagerzapfen 22 des Tragarms 20, wirkt die Feder 34 dann sowohl zum Ausschwenken des Tragarms 20 um die vom Lagerzapfen 22 definierte Schwenkachse als auch zum Verschieben dieses Lagerzapfens 22 entlang der von der Kulisse 24 definierten Führungsbahn, in Fahrzeuglängsrichtung betrachtet nach hinten. Die Feder 34 besitzt somit eine Doppelfunktion, nämlich einerseits zum Ausschwenken des Tragarms 20 und andererseits zur Schubbelastung des Tragarms 20 im Sinne einer Verschiebung der Schwenkachse. Die Feder 34 "steuert" hierbei in auf Grund der geometrischen Verhältnisse eindeutiger Weise die Verschiebung des Lagerzapfens 22 in Abhängigkeit von der Verschwenkungsstellung des Tragarms 20. Der zweite Federschenkel bildet gewissermaßen einen "Steuerhebel" zur zwangsweisen Koordination der Verschwenkbewegung und der Verschiebebewegung. Im dargestellten Ausführungsbeispiel beruht diese Koordination auf der Wahl der gegenseitigen Abstände zwischen den Komponenten 22, 36, 40.

Dies hat bei der dargestellten Ausführungsform zur Folge, dass das Windabweiserelement 18 in seiner Wirkstellung nicht nur orthogonal zur Dachkontur nach oben verlagert ist sondern zusätzlich parallel zur Dachkontur beträchtlich nach hinten verlagert ist. Dies ist für den dargestellten Windabweiser 18, 28 so gewollt und durch die Doppelnutzung der Feder 34 in konstruktiv einfacher Weise realisiert. Da der Deckel des verwendeten Dachöffnungssystems an beiden Seiten einen entsprechenden Anschlag für die Tragarme 20 aufweist und die Tragarme 20 über das gemeinsame Windabweiserelement 18 miteinander verbunden sind, erfolgt die Ausschwenkbewegung der Tragarme 20 vollkommen synchron.

Wenn das Fahrzeugdach wieder geschlossen wird, so laufen diese Anschläge an der Unterseite des Deckels wieder gegen die Oberseite der Tragarme 20 und drücken diese in an sich bekannter Weise unter Überwindung der Federkraft wieder nach unten in die Ruhestellung gemäß Fig. 1. Hierbei steuert die Feder 34 bzw. deren vorgegebene, in den Figuren gestrichelt eingezeichnete Bewegungsbahn wieder die Koordination zwischen der Einschwenkbewegung und der Verschiebebewegung.

Bei der nachfolgenden Beschreibung von weiteren Ausführungsbeispielen werden für analoge Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

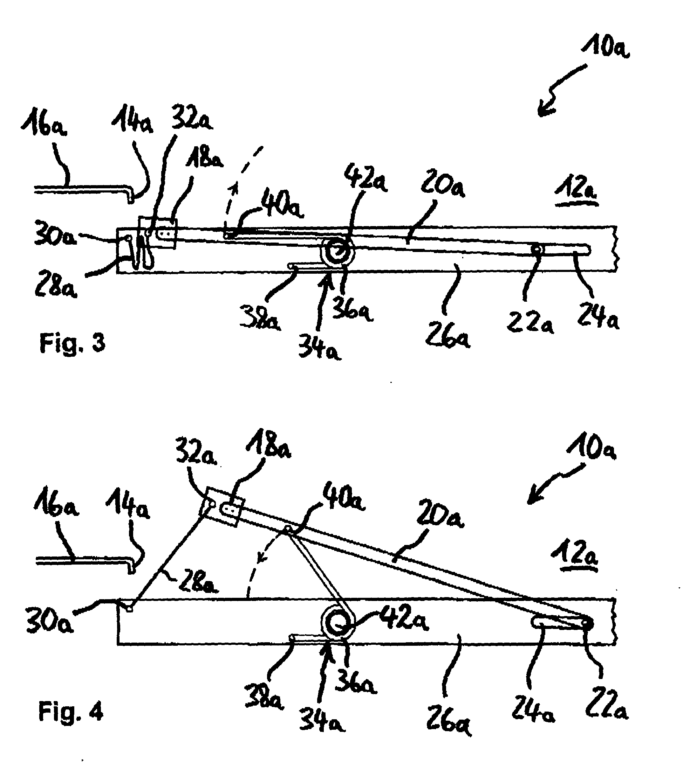

Die Fig. 3 und 4 sind den Fig. 1 und 2 entsprechende Darstellungen und veranschaulichen eine Vorrichtung 10a gemäß einer weiteren Ausführungsform.

Im Unterschied zu der mit Bezug auf die Fig. 1 und 2 beschriebenen Ausführungsform ist bei dieser Vorrichtung 10a eine Schenkelfeder 34a vorgesehen, deren erster Federschenkel sich von einem mittleren Federabschnitt bzw. Auge 36a in Fahrzeuglängsrichtung betrachtet nach vorne erstreckt, und deren zweiter Federschenkel am oberen Bereich des Auges 36a absteht.

Die im Zustand gemäß Fig. 3 von einem zweiten Federende 40a auf einen Tragarm 20a ausgeübte elastische Vorspannung wirkt wieder im Uhrzeigersinn entlang der in Fig. 3 gestrichelt eingezeichneten Linie. Dementsprechend ist es bei dieser Ausführungsform wesentlich, den ersten Federschenkel und/oder das erste Federende 38a gegen eine Bewegung im Gegenuhrzeigersinn bzw. nach unten abzustützen. Ansonsten funktioniert die Vorrichtung 10a im Wesentlichen wie die vorstehend beschriebene Vorrichtung 10.

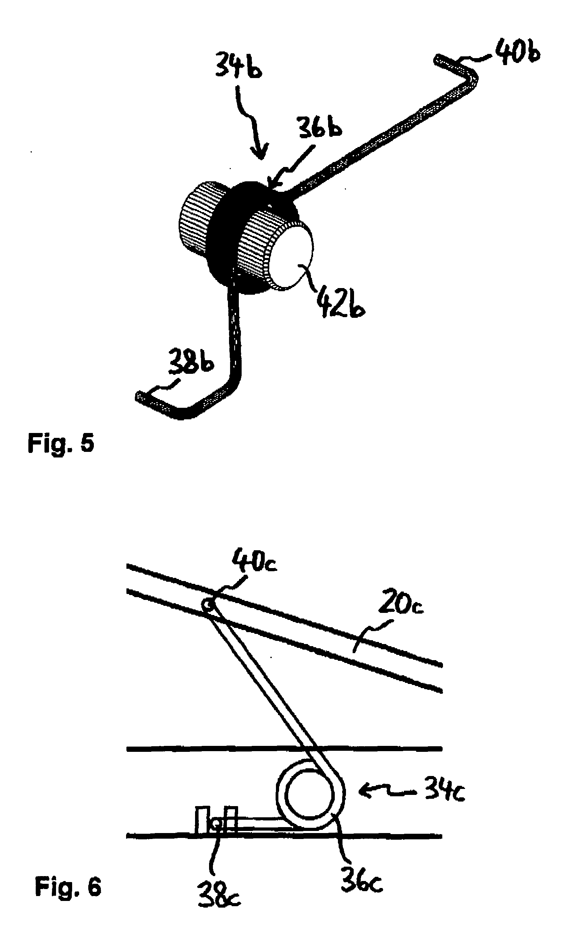

Fig. 5 zeigt eine Ausführungsform einer für die erfindungsgemäße Vorrichtung verwendbaren Schenkelfeder 34b samt Haltezapfen 42b.

Zur Erzielung einer über den Federverstellbereich möglichst gleichmäßigen Federwirkung ist es wie dargestellt günstig, wenn ein Auge 36b der Feder 34b aus mehreren Windungen des verwendeten Federmaterials besteht. Dies ist (ganz allgemein) jedoch nicht zwingend.

Vorteilhaft ist ferner, wenn die Federenden 38b, 40b wie dargestellt umgebogen sind, insbesondere für einen Endverlauf parallel zu der vom Auge 36b gebildeten Achse. Damit kann jedes Federende sowohl in einfacher Weise fixiert als auch schwenkgelagert werden, wie dies bei den oben beschriebenen Vorrichtungen 10 und 10a der Fall ist.

Fig. 6 zeigt ein Detail einer weiteren Ausführungsform, bei welcher eine Schenkelfeder 34c in einer Installationsumgebung montiert ist, die etwa der Ausführungsform gemäß Fig. 4 entspricht. Im Unterschied zu der mit Bezug auf Fig. 4 beschriebenen Ausführungsform ist ein Federauge 36c jedoch nicht durch einen Haltezapfen fixiert sondern gewissermaßen "schwimmend". Lediglich die Lage von Federenden 38c (an einem Dachrahmen 26c) und 40c (an einem Tragarm 20c) sind definiert. Hierzu greifen umgebogene Endbereiche der Federenden 38c und 40c wieder beispielsweise in entsprechende Aussparungen am Dachrahmen 26c bzw. am Tragarm 20c ein. Was die Abstützung des ersten Federendes 38c anbelangt, so ist neben einer Abstützung gegen eine Ausweichbewegung im Gegenuhrzeigersinn bzw. nach unten auch wichtig, ein Ausweichen in Fahrzeuglängsrichtung zu verhindern. Ansonsten funktioniert die in Fig. 6 dargestellte Vorrichtung im Wesentlichen wie bereits mit Bezug auf Fig. 4 erläutert.

Unter Umständen ist es bei der Ausführung gemäß Fig. 6 von Vorteil, dass das Auge 36c schwimmend gelagert ist. Der Innendurchmesser des Federauges ändert sich nämlich während der Federverstellung, so dass der bei den oben beschriebenen Vorrichtungen 10 und 10a zur Fixierung des Auges verwendete Zapfen 22 bzw. 22a in seinem Außendurchmesser mit entsprechendem Spiel dimensioniert sein muss, was wiederum in demjenigen Zustand der Feder, bei welcher der Innendurchmesser des Auges maximal ist, eine gewisse Lageunsicherheit der Fixierung mit sich bringt. Bei der Vorrichtung 10 besteht diese Lageunsicherheit in der Ruhestellung gemäß Fig. 1, wohingegen diese Lageunsicherheit bei der Vorrichtung 10a in der Wirkstellung gemäß Fig. 4 vorliegt. Demgegenüber tritt dieser Effekt bei der in Fig. 6 dargestellten Feder 34c nicht auf, da diese Feder lediglich an ihren Enden gelagert ist. Das erste Federende 38c kann hierbei entweder drehfest oder verschwenkbar am Dachrahmen gelagert sein.

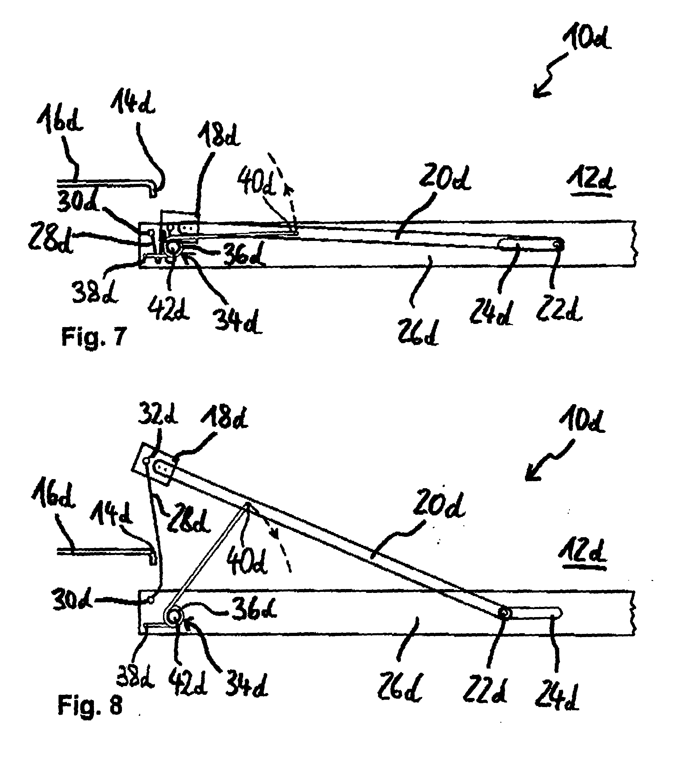

Die Fig. 7 und 8 sind den Fig. 1 und 2 entsprechende Darstellungen einer Vorrichtung 10d gemäß einer weiteren Ausführungsform.

Die Vorrichtung 10d unterscheidet sich insofern grundlegend von den oben bereits beschriebenen Ausführungsformen, als die dachseitige Fixierung einer Feder 34d an einem Haltezapfen 42d in Fahrzeuglängsrichtung betrachtet vor der Anbindungsstelle (Anlenkung) eines zweiten Federendes 40d an einem Tragarm 20d liegt (Fig. 7).

Wie am Verlauf der in Fig. 7 gestrichelt eingezeichneten Linie ersichtlich, hat dies zur Folge, dass die Feder 34d den Tragarm 20d beim Ausschwenken auf Zug belastet und einen Lagerzapfen 20d in einer Kulisse 24d zwangsgesteuert nach vorne verschiebt. Somit ergibt sich für ein am vorderen Tragarmende angeordnetes Windabweiserelement 18d eine Wirkstellung (Fig. 8), bei welcher dieses Element in Fahrzeuglängsrichtung betrachtet gegenüber seiner Ruhestellung nach vorne verlagert ist. In dieser Wirkstellung ergibt sich somit eine umgekehrte Schrägstellung eines unterhalb des Windabweiserelements 18d aufgespannten Netzes 28d.

Dieses Ausführungsbeispiel veranschaulicht, dass die erfindungsgemäße Gestaltung also auch für die Verlagerung eines Windabweiserelements aus der versenkten Stellung heraus und dann nach vorne in Überlappung mit der festen Dachhaut verwendet werden kann. Hierfür ist lediglich die Gestaltung bzw. geometrische Anbindung der verwendeten Feder entsprechend anzupassen.

Bei allen oben beschriebenen Ausführungsbeispielen, insbesondere jedoch bei dem Beispiel gemäß der Fig. 7 und 8, ist folgendes zu bedenken: Falls das Einschwenken des Tragarms in einfacher Weise wie beschrieben allein durch ein Niederdrücken des Tragarms von oben erfolgen soll, so darf keine "Selbsthemmung" durch die im ausgestellten Zustand vorliegenden geometrischen Verhältnisse vorliegen. Für die obigen Ausführungsbeispiele bedeutet dies, dass in der Wirkstellung der zweite Federschenkel noch einen gewissen Winkel bezüglich einer Normalen des Tragarms bilden muss. Allgemein ausgedrückt muss ein in Wirkstellung auf den Tragarm wirkendes Einschwenkdrehmoment eine rückstellende Wirkung auf die Feder ausüben. Bei den oben beschriebenen Vorrichtungen mit einer Schenkelfeder beträgt der Winkel zwischen dem zweiten Federschenkel und der Normalen des Tragarms beispielsweise bevorzugt mindestens 20°. Der Verschwenkwinkel des zweiten Federschenkels zwischen Ruhestellung und Wirkstellung liegt bevorzugt in einem Bereich von 30° bis 80°, beispielsweise in einem Bereich von 40° bis 70°. Die Länge des zweiten Federschenkels beträgt bevorzugt mindestens 30% des Abstands zwischen der Schwenkachse und der Anbindungsstelle des zweiten Federschenkels am Tragarm.

An den oben beschriebenen Ausführungsbeispielen können eine Vielzahl von Modifikationen durchgeführt werden, ohne den Bereich der Erfindung zu verlassen. So ist z. B. die beschriebene Gestaltung des Windabweisers mit einem Windabweiserelement und einem darunter aufgespannten Netz lediglich beispielhaft zu verstehen. Für die Gestaltung des Windabweisers kann selbstverständlich auf andere, an sich bekannte Konstruktionen zurückgegriffen werden. Anstelle einer Schenkelfeder der beschriebenen Formgestaltung kommen insbesondere z. B. auch Blattfedern in Betracht, deren Enden einerseits dachfest und andererseits am Tragarm angebunden (befestigt oder angelenkt) sind.

### Bezugszeichenliste

- 10: Windabweiservorrichtung
- 12: Dachöffnung
- 14: Vorderkante der Dachöffnung
- 16: feste Dachhaut
- 18: Windabweiserelement
- 20: Tragarm
- 22: Lagerzapfen
- 24: Kulisse
- 26: Dachrahmen
- 28: Netz
- 30: Randbefestigung
- 32: Randbefestigung
- 34: Schenkelfeder
- 36: mittlerer Federabschnitt
- 38: erstes Federende
- 40: zweites Federende
- 42: Haltezapfen

## Patentansprüche

1. Vorrichtung zur Beeinflussung einer Luftströmung im Bereich der Dachöffnung (12) eines öffnungsfähigen Fahrzeugdaches mit einem im Bereich der Vorderkante (14) der Dachöffnung (12) angeordneten Windabweiserelement (14) und mit einem Tragarm (20), welcher an einem vorderen Tragarmende das Windabweiserelement (18) trägt und mit einem hinteren Tragarmende um eine parallel zur Vorderkante (14) der Dachöffnung (12) sich erstreckende Schwenkachse (22) zum Ausschwenken und Einschwenken des Tragarms (20) schwenkbar gelagert ist,
**dadurch gekennzeichnet, dass** die Schwenkachse (22) des Tragarms (20) in Fahrzeuglängsrichtung verschiebbar ist und eine Verschiebung der Schwenkachse (22) beim Ausschwenken und Einschwenken durch eine den Tragarm (20) in Ausschwenkrichtung belastende Feder (34) bewirkt wird, die einerseits am Fahrzeugdach gelagert ist und andererseits in einem mittleren Bereich des Tragarms (20) gelagert ist.

2. Vorrichtung nach Anspruch 1, wobei die Verschiebbarkeit der Schwenkachse (22) mittels einer Kuüssenführung (22, 24) realisiert ist.

3. Vorrichtung nach Anspruch 1 oder 2, wobei die Lagerung der Feder (34) am Fahrzeugdach (26) und/oder die Lagerung der Feder (34) am Tragarm (20) eine Schwenklagerung ist.

4. Vorrichtung nach einem der Ansprüche 1 bis 3, wobei die Feder (34) eine Schenkelfeder ist.
